(19) **Europäisches Patentamt European Patent Office Office européen des brevets**

(11) **EP 2 186 414 B1**

(12) **FASCICULE DE BREVET EUROPEEN**

(45) Date de publication et mention
de la délivrance du brevet:
**26.06.2013 Bulletin 2013/26**

(51) Int Cl.:
***A22B 5/20*** *(2006.01)*

(21) Numéro de dépôt: **09175363.2**

(22) Date de dépôt: **09.11.2009**

(54) **Système de coupe pour machine de fendage longitudinal de carcasses d'animaux de boucherie**

Schneidesystem für Längszerteilmaschine von Schlachttierkörpern in der Metzgerei

Cutting system for a machine for longitudinal chopping of slaughtered animal carcasses

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **13.11.2008 FR 0857695**

(43) Date de publication de la demande:
**19.05.2010 Bulletin 2010/20**

(73) Titulaire: **Couedic Madore Equipement
22210 Plemet (FR)**

(72) Inventeurs:
• **Le Guennec, Laurent
56500, Plumelin (FR)**
• **Horellou, Serge
22600, Loudeac (FR)**

(74) Mandataire: **Hays, Bertrand
Novagraaf Technologies
12 Place des Halles Saint Louis
56100 Lorient (FR)**

(56) Documents cités:
**ES-A1- 2 293 805      FR-A- 2 307 471
FR-E- 96 513            US-A- 4 131 972**

**Description**

La présente invention concerne un système de coupe pour la découpe ou fendage longitudinal de carcasses d'animaux de boucherie en deux demi-carcasses, et une machine de découpe ou fendage longitudinal de carcasses comprenant un tel système de coupe.

Il est connu, notamment par le document brevet FR 2 307 471 des machines de découpe, appelées également fendeuses, pour découper ou fendre longitudinalement des carcasses d'animaux de boucherie suspendues par les pattes arrière, en particulier de porcs, en deux demi-carcasses, comprenant un système de coupe apte à être déplacé au moins verticalement par un système de déplacement.

Le système de coupe, appelé également boîte à couteau, comprend deux couteaux ou lames adjacentes, chacune montée sur un bras, lesdits bras étant montés de part et d'autre d'un plan vertical de symétrie sur un dispositif d'entraînement à excentrique et à biellette apte à entraîner les deux lames selon un mouvement alterné oscillant, à composantes horizontale et verticale, sensiblement dans ledit plan de symétrie. Les deux lames viennent ainsi frapper l'une après l'autre la carcasse à découper et garantissent une découpe rapide, efficace et propre des carcasses.

Les mouvements des bras portant les lames provoquent toutefois un balourd sur l'ensemble de la machine qui peut être préjudiciable pour la qualité de coupe, ainsi que pour la fatigue des différents organes de la machine. Ce balourd est particulièrement gênant dans le cas de machines de type suspendues, peu rigides, dans lesquelles le système de déplacement est monté sur une structure porteuse supérieure suspendue.

Le but de la présente invention est de proposer un système de coupe palliant au moins l'un des inconvénients précités, qui permet notamment d'obtenir une bonne qualité de coupe, tout en garantissant une découpe longitudinale rapide, efficace et/ou propre de carcasses.

A cet effet, la présente invention propose un système de coupe pour la découpe ou fendage longitudinal de carcasses d'animaux de boucherie, suspendues sensiblement verticalement, en deux demi-carcasses comprenant deux lames adjacentes chacune montée sur un bras, lesdits bras étant montés sur un dispositif d'entraînement à excentrique et à biellette, de part et d'autre d'un plan de symétrie vertical du système de coupe, ledit dispositif d'entraînement étant apte à entraîner les deux lames selon un mouvement alterné oscillant à composantes horizontale et verticale, sensiblement dans ledit plan vertical de symétrie, **caractérisé en ce que** chaque bras est muni d'un dispositif de contrepoids comprenant un arceau fixé audit bras et portant en extrémité un contrepoids disposé du côté du plan de symétrie opposé audit bras, de sorte que le bras avec sa lame et son dispositif de contrepoids ait un centre de gravité disposé sensiblement dans le plan de symétrie et un produit d'inertie sensiblement nul.

Selon l'invention, chaque bras est équipé d'un dispositif de contrepoids permettant d'équilibrer les balourds de types moments autour de l'axe vertical W et de l'axe horizontal U qui définissent ledit plan de symétrie vertical du dispositif de coupe. Le dispositif de contrepoids solidaire du bras, en particulier la masse $M_3$ du contrepoids et sa position $X_3$, $Y_3$, est défini de sorte que le centre de gravité de l'ensemble mobile bras+lame+dispositif de contrepoids soit disposé sensiblement dans le plan de symétrie et que le produit d'inertie Ixy dudit ensemble mobile soit sensiblement nul.

Selon un mode de réalisation, ledit dispositif d'entraînement comprend un réducteur à excentrique comportant un disque d'excentrique monté rotatif sur un support et portant sur ses faces opposées des manetons d'excentrique diamétralement opposés, chaque bras étant monté pivotant sur un maneton d'excentrique et est articulé, à proximité de son extrémité opposée à la lame, à une biellette articulée sur ledit support, chaque dispositif de contrepoids étant de préférence fixé par son arceau sur un tronçon du bras défini entre son extrémité opposée à la lame et son articulation au maneton d'excentrique.

Selon un mode de réalisation, l'arceau de chaque dispositif de contrepoids a une forme générale de L et comprend une première branche fixée au bras, s'étendant sensiblement perpendiculairement au plan de symétrie et se prolongeant par une deuxième branche, ladite deuxième branche s'étendant sensiblement parallèlement au plan de symétrie et portant en extrémité ledit contrepoids.

Selon un mode de réalisation, les premières branches des arceaux sont décalées longitudinalement.

Selon un mode de réalisation, le dispositif d'entraînement comprend un réducteur dont ledit disque d'excentrique est monté rotatif dans le support au moyen d'un système central de roulement à rouleaux croisés et est solidaire d'une roue dentée latérale engrenant avec un pignon d'extrémité de l'arbre d'entraînement d'un moteur. Ce type de réducteur permet d'obtenir un écartement réduit entre les bras.

La présente invention a également pour objet une machine de découpe longitudinale de carcasses d'animaux de boucherie suspendues sensiblement verticalement à un convoyeur aérien, **caractérisée en ce qu'**elle comprend un système de coupe, tel que défini précédemment, monté sur un système de déplacement, ledit système de déplacement étant apte à être fixé de manière suspendue à une structure porteuse supérieure, et étant apte à déplacer ledit système de coupe selon au moins une première direction verticale, de préférence également selon une deuxième direction horizontale perpendiculaire à la première. Selon un mode de réalisation particulier, ledit système de déplacement est apte à déplacer le système de coupe selon trois directions orthogonales entre elles, la machine permettant la découpe de façon continue de carcasses se déplaçant le long d'un convoyeur aérien.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés, sur lesquels :

- les figures 1 et 2 sont deux vues en perspective d'un système de coupe selon l'invention ;
- la figure 3 est une vue en perspective d'un premier bras du système de coupe des figures 1 et 2, ledit bras étant équipé d'une lame et d'un dispositif de contrepoids selon l'invention ;
- la figure 4 est une vue en perspective du dispositif d'entraînement des bras du système de coupe de la figure 1 ;
- les figures 5 et 6 sont deux schémas illustrant de dessus et de côté la cinématique du mouvement des bras, en l'absence des systèmes de contrepoids ;
- la figure 7 est une vue schématique de dessus d'un bras selon l'invention muni de son dispositif de contrepoids ;
- la figure 8 est une vue schématique en coupe longitudinale du réducteur à excentrique du dispositif d'entraînement ; et,
- la figure 9 est une vue schématique en perspective d'une machine de découpe de type suspendue équipée d'un système de coupe selon l'invention.

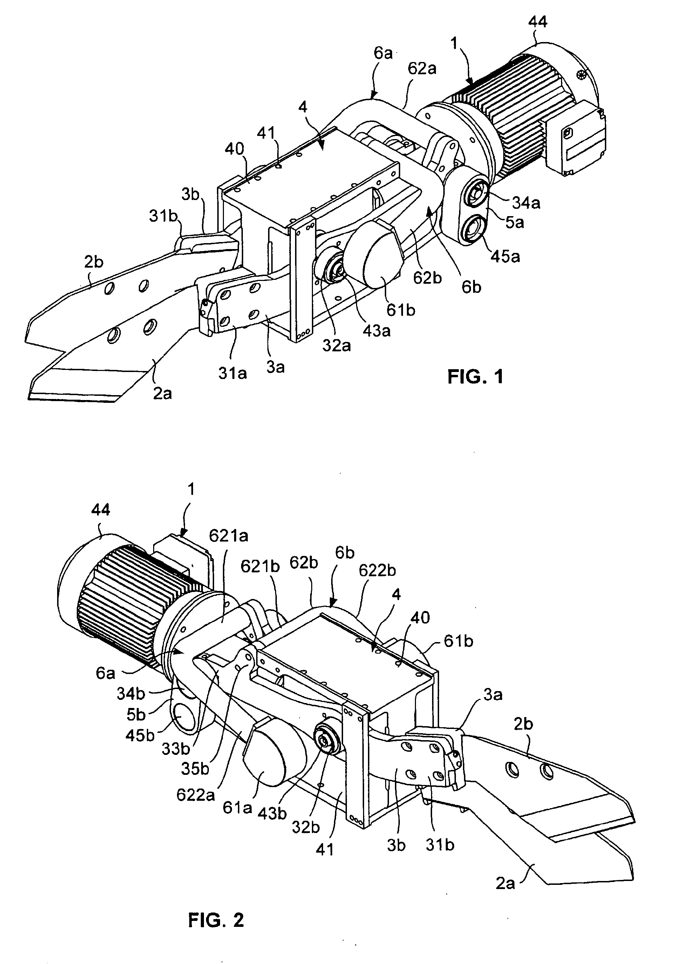

En référence aux figures 1 à 6, le système de coupe 1 comprend deux lames planes 2a, 2b adjacentes, quasi jointives, chaque lame est montée à une première extrémité 31a, 31b d'un bras 3a, 3b, les bras étant reliés à un dispositif d'entraînement 4 à excentrique et à biellette qui permet de transformer un mouvement de rotation, notamment de 1'arbre d'un moteur électrique, en un mouvement elliptique des lames. Le système comprend un premier bras 3a, dit bras droit, et un second bras 3b, dit bras gauche.

Le dispositif d'entraînement 4 comprend un réducteur à excentrique 40 comprenant un support ou carter 41 dans lequel est monté rotatif autour d'un axe A1 un disque d'excentrique 42 portant sur ses faces opposées des manetons 43a, 43b diamétralement opposés. Les bras sont montés pivotant de part et d'autre du disque sur les manetons, autour d'axes A2, A2'. Pour ce montage, chaque bras est muni d'un moyeu central 32a, 32b, dit moyeu d'excentrique, dans lequel un maneton vient s'insérer. Le disque du réducteur à excentrique est relié à l'arbre d'entraînement d'un moteur électrique 44. Par ailleurs, chaque bras est articulé par sa deuxième extrémité 33a, 33b opposée à la lame à une première extrémité d'une biellette 5a, 5b autour d'un axe A4, A4', les secondes extrémités des biellettes étant articulées sur le support 41 autour d'un même axe A3. Pour ce montage, le support porte deux moyeux 45a, 45b sur lesquels les secondes extrémités des biellettes 5a, 5b sont articulées. Chaque bras porte à sa deuxième extrémité un moyeu 34a, 34b dit de biellette, les premières extrémités des biellettes venant s'insérer dans lesdits moyeux de biellettes. Les deux lames sont disposées sensiblement à plat l'une contre l'autre, sensiblement selon le plan vertical de symétrie P du système de coupe.

Le mouvement de va-et-vient vertical et horizontal simultané et alterné des bras portant les lames provoque un balourd. Pour supprimer ce balourd, chaque bras est équipé d'un dispositif de contrepoids 6a, 6b comprenant un contrepoids 61a, 61b solidarisé au bras par un arceau 62a, 62b.

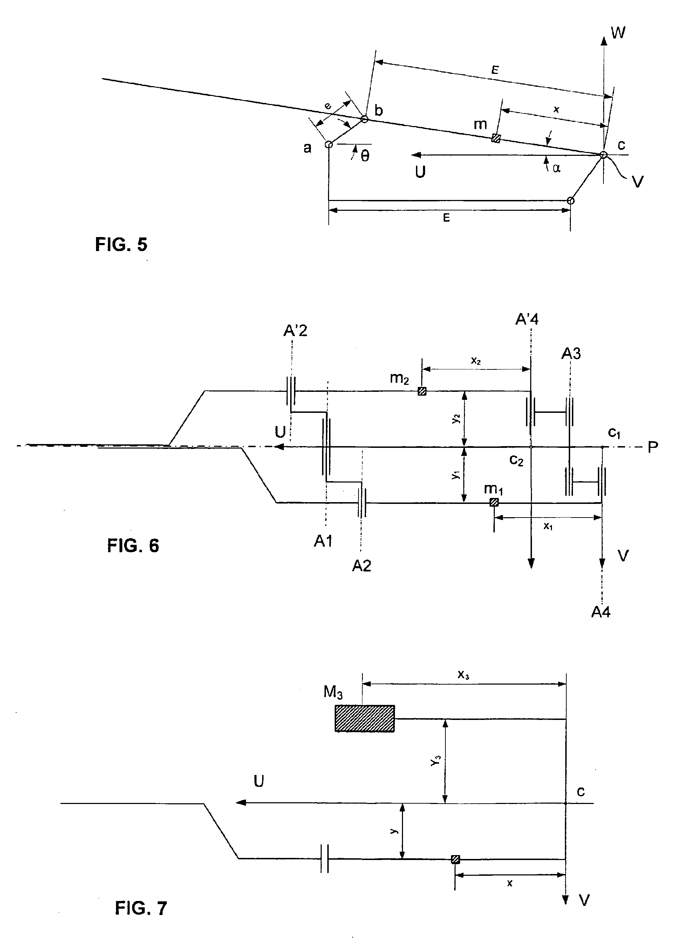

Les figures 5 et 6 sont des schémas illustrant la cinématique des bras, sans dispositif de contrepoids, la figure 5 illustre la cinématique d'un des deux bras. Sur ces figures, on définit :

- le point c à l'intersection du plan de symétrie P et de l'axe A4, A'4 d'articulation du bras sur la biellette, ce point est noté $c_1$ dans le cas du bras droit et $c_2$ dans le cas du bras gauche ;
- 3 axes orthogonaux entre eux passant par le point c : un axe horizontal passant par le plan de symétrie P, noté axe U, un axe horizontal perpendiculaire au plan P, noté axe V, cet axe étant confondu avec l'axe A4 dans le cas du bras droit et avec l'axe A'4 dans le cas du bras gauche, et un axe vertical passant par le plan P, noté W ;
- le point 'b' de pivotement du bras sur l'excentrique ;
- le point 'a' de pivotement du disque ;
- la distance 'e' entre les points a et b, soit la distance entre un maneton et l'axe de rotation du disque d'excentrique ;
- la distance 'E' entre les points c et b, soit la distance entre le moyeu d'excentrique et le moyen de biellette d'un bras ;

Le dispositif de contrepoids permet d'équilibrer les balourds de type moment autour de l'axe U et de type moment autour de l'axe W. On verra par la suite que les balourds de type forces s'annulent. Les moments autour de l'axe V ne sont pas équilibrés. Ce n'est pas nécessaire puisque les contrecoups de lame dans les carcasses provoquent déjà un moment dans ce sens. De plus, la machine de découpe est toujours rigide dans ce sens, même dans le cas d'une machine de type suspendue.

En référence à la figure 5, pour le calcul du balourd, on va considérer une masse 'm' élémentaire située sur l'axe passant par les points b et c. Cette simplification est faisable puisque l'ensemble bras + lame a une forme allongée. On dira ensuite que le balourd provoqué par un ensemble bras + lame est égal à la somme des balourds provoqués par l'ensemble des masses 'm'.

Dans un premier temps, on va formuler la vitesse de la masse 'm', et par dérivation les accélérations du point

« m » suivant les axes U, V et W:

$\dot{u} = e\dot{\theta}\sin\theta$ , $\dot{\theta}$ étant la vitesse angulaire de l'excentrique,

$\dot{v} = 0$ , car le mouvement est plan

$\dot{w} = x\dot{\alpha} = x(e/E)\dot{\theta}\cos\theta$ , $\dot{\alpha}$ étant la vitesse angulaire du bras

On considère pour simplifier que le point 'c' a un mouvement horizontal suivant l'axe U et que $\alpha$ reste relativement faible. Par dérivation on va déterminer les accélérations du point 'm' suivant les axes U, V et W :

$\ddot{u} = e\ddot{\theta}\sin\theta + e\dot{\theta}^2\cos\theta = e\dot{\theta}^2\cos\theta$ , car $\ddot{\theta}=0$

$\ddot{v} = 0$

$\ddot{w} = x(e/E)\ddot{\theta}\cos\theta - x(e/E)\dot{\theta}^2\sin\theta = -x(e/E)\dot{\theta}^2\sin\theta$ , car $\ddot{\theta}=0$

Cette masse m génère des forces et moments au point c qui sont :

$Fu = m\ddot{u} = m\,e\dot{\theta}^2\cos\theta$    Fu : force exercée sur m suivant l'axe U

$Fv = 0$    Fv : force exercée sur m suivant l'axe V

$Fw = -mx(e/E)\dot{\theta}^2\sin\theta$    Fw : force exercée sur m suivant l'axe W

On calcule maintenant les moments au point c suivant les axes U et W, le moment exercé suivant l'axe V n'étant pas équilibré :

$Mu = yFw = -mxy(e/E)\dot{\theta}^2\sin\theta$

Mu : moment exercé en c sur m suivant l'axe U

x étant la distance de la masse m par rapport à l'axe V,

y étant la distance de la masse m par rapport au plan P

$Mw = -yFu = -mye\dot{\theta}^2\cos\theta$

Mw : moment exercé en c sur m suivant l'axe W

Les 2 bras étant symétriques, on va calculer les forces et les moments exercés sur une masse $m_1$ sur le premier bras et sur une masse $m_2$ sur le second bras ($m_1 = m_2$; $x_1=x_2$, $y_1=-y_2$). Si pour la masse $m_1$, l'angle de l'excentrique est égal à $\theta$, alors l'angle de l'excentrique est égal à $\theta+180°$ pour la masse $m_2$ :

$FU_1$ sur $m_1 = m_1\,e\dot{\theta}^2\cos\theta$

$Fu_2$ sur $m_2 = m_2\,e\dot{\theta}^2\cos(\theta+180°) = -m_1\,e\dot{\theta}^2\cos\theta = -FU_1$

$Fw_1$ sur $m_1 = -m_1 x_1(e/E)\dot{\theta}^2\sin\theta$

$Fw_2$ sur $m_2 = -m_2 x_2(e/E)\dot{\theta}^2\sin(\theta+180°) = m_1 x_1(e/E)\dot{\theta}^2\sin\theta = -Fw_1$

$Mu$ en $c_1$ sur $m_1 = y_1 Fw_1 = -m_1 x_1 y_1(e/E)\dot{\theta}^2\sin\theta$

$Mu$ en $c_2$ sur $m_2 = y_2 FW_2 = -y_1(-Fw_1) = y_1 Fw_1 = Mu$ en $c_1$ sur $m_1$

$Mw$ en $c_1$ sur $m_1 = -y_1 Fu_1 = -Y_1\, m_1\,e\dot{\theta}^2\cos\theta$

$Mw$ en $c_2$ sur $m_2 = -y_2 Fu_2 = y_1(-Fu_1) = -y_1 Fu_1 = Mw$ en $c_1$ sur $m_1$

On se rend compte que les efforts Fu et Fw sur les 2 bras s'annulent. En revanche les moments Mu et Mw s'ajoutent.

On va maintenant s'intéresser au balourd global sur un ensemble bras + lame. On peut considérer que l'ensemble des Mu en c sur m et l'ensemble des Mw en c sur m sont :

$$\sum Mu = \sum mxy(e/E)\dot{\theta}^2\sin\theta = -(e/E)\dot{\theta}^2\sin\theta\left(\sum mxy\right)$$

$$\sum Mw = -e\dot{\theta}^2\cos\theta\left(\sum my\right)$$

Pour éliminer le balourd de type moment autour de l'axe U et le balourd de type moment autour de l'axe W, chaque bras est équipé d'un dispositif de contrepoids comprenant un arceau et un contrepoids. Ledit dispositif de contrepoids est formé de masses élémentaires $m_3$ de coordonnées $x_3$, $y_3$. Pour obtenir un ensemble bras+lame+dispositif de contrepoids équilibré, il faut remplir les deux conditions suivantes :

$$\sum MXY = \sum mxy + \sum m_3 x_3 y_3 = 0$$

ce qui correspond à ensemble bras+lame+dispositif de contrepoids ayant un produit d'inertie (Ixy) nul, $\Sigma MXY$ désignant l'ensemble des masses élémentaires de l'ensemble bras+lame+dispositif de contrepoids, $\Sigma mxy$ désignant comme précédemment l'ensemble des masses élémentaires de l'ensemble bras+lame, et $\Sigma m_3 x_3 y_3$ désignant l'ensemble des masses élémentaires du dispositif de contrepoids ; et,

$$\sum MY = \sum my + \sum m_3 y_3 = 0$$

ce qui correspond à un ensemble bras+lame+dispositif de contrepoids ayant un centre de gravité situé sur le plan de symétrie P.

Sur la figure 7, il est représenté un bras avec un dispositif de contrepoids selon l'invention. Par simplification, on considère que le dispositif de contrepoids est formé d'une seule masse élémentaire $M_3$, de coordonnées $X_3$, $Y_3$. On peut dire que pour avoir un bras équilibré on devra satisfaire aux conditions suivantes :

$$\sum mxy + M_3 X_3 Y_3 = 0 \qquad \text{et} \qquad \sum my + M_3 Y_3 = 0$$

Après permutation des formules on en déduit que :

$$X_3 = \sum mxy / \sum my$$

$Y_3$ est choisi le plus faible possible, et est défini en fonction de la largeur minimale du réducteur à excentrique. Après déduction de $X_3$, on en déduit $M_3$. A titre d'exemple, pour $\Sigma my = 850$ Kg.mm, $\Sigma mxy = 230000$ Kg.mm$^2$, et $Y_3$ choisi à 160mm, on obtient $X_3 = 270$ mm et $M_3 = 5.3$ Kg.

Après ce premier calcul, les valeurs $X_3$, $Y_3$ et $M_3$ du contrepoids sont réajustées pour prendre en compte la forme et la masse de l'arceau du dispositif de contrepoids.

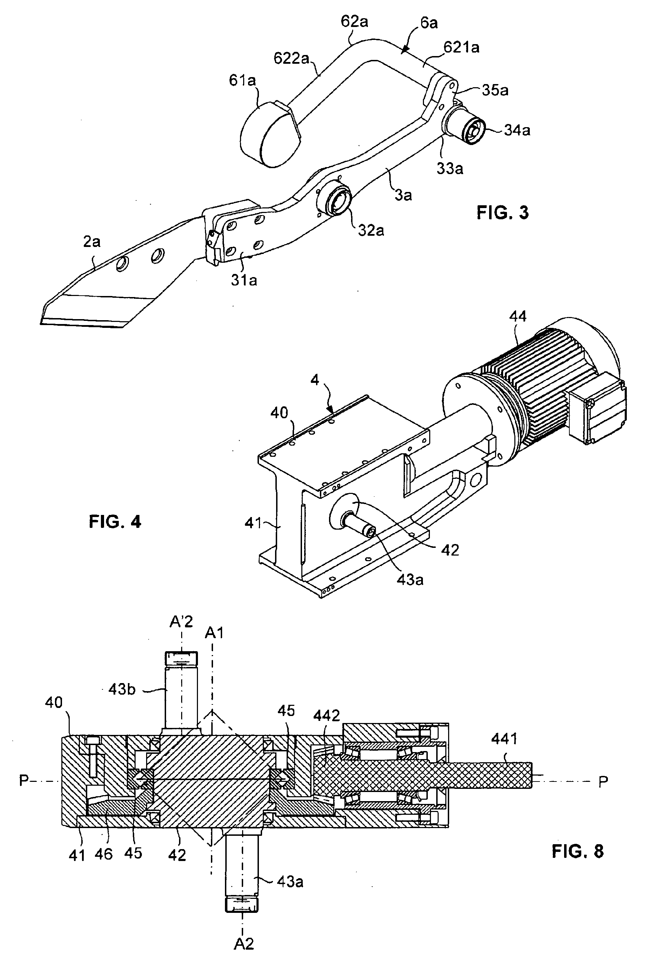

En référence aux figures 2 et 3, les arceaux 62a, 62b ont une forme générale de L, chaque arceau étant fixé par l'extrémité d'une première branche 621 a, 621b à un bras, du côté du moyeu d'excentrique opposé à la lame, de préférence le plus près possible du moyeu de biellette et porte à l'extrémité de sa seconde branche 622a, 622b un contrepoids 61a, 61b, la première et la seconde branches correspondant respectivement au décalage $Y_3$ et $X_3$ définis précédemment.

Les arceaux des contrepoids ne doivent pas se rencontrer, les premières branches des arceaux sont ainsi fixées sur les bras en des points décalés longitudinalement. Les arceaux sont fixés à des pattes verticales solidaires des bras afin de décaler verticalement les arceaux au dessus de l'arbre du moteur. L'arceau 62a du bras droit 3a est fixé par sa première branche 621a à une patte 35a verticale disposée à proximité du moyeu de biellette 34a. L'arceau 62b du bras gauche 3b est fixé par sa première branche 621b à une patte 35b verticale qui, par rapport à la patte du bras droit, est légèrement décalée vers le moyeu d'excentrique 32b.

La première branche 621a du bras droit s'étend sensiblement perpendiculairement au premier bras, au-dessus de l'arbre d'entraînement du moteur, au-dessus et au-delà du bras gauche 3b, et se prolonge par une deuxième branche 622a disposée sensiblement parallèlement au plan P, du côté extérieur du bras gauche, le contrepoids 61a porté par cette deuxième branche étant disposé à l'extérieur du bras gauche, à distance de ce dernier. De manière analogue, la première branche 621b du bras gauche 3b s'étend sensiblement perpendiculairement au bras gauche, au dessus et au-delà du bras droit 3a, et se prolonge par une deuxième branche 622b disposée sensiblement parallèlement au plan P, du côté extérieur du bras droit, le contrepoids 61b porté par cette deuxième branche étant disposé du côté extérieur du bras droit, sensiblement parallèlement et à distance de ce dernier.

Les contrepoids sont placés en largeur ($Y_3$) au plus près du moyeu excentrique afin d'avoir un mécanisme de largeur raisonnable. Pour cela on doit partir avec des bras le moins écartés possible, et donc un réducteur le plus étroit possible pour avoir le moins de balourd possible à équilibrer et pour positionner le contrepoids.

Il est connu d'utiliser un réducteur dans lequel le disque est monté rotatif dans un carter via deux systèmes de roulement à billes disposés de part et d'autre d'une roue dentée centrale solidaire du disque. Cette roue engrène avec une vis sans fin disposée perpendiculairement à l'axe de rotation du disque, la liaison entre la vis sans fin et l'arbre du moteur pour l'entraînement en rotation de la vis sans fin étant réalisée au moyen d'une courroie. La roue et la vis sans fin ont l'inconvénient d'avoir un faible rendement et d'avoir une usure élevée.

Pour réduire l'écartement entre les bras, le système de coupe selon l'invention comprend avantageusement un réducteur étroit à couple conique tel qu'illustré à la figure 8. Le disque d'excentrique 42 est monté rotatif dans un logement du carter 41 au moyen d'un système central de roulement 45 à rouleaux croisés, connu en soi, disposé selon le plan de symétrie P, ou légèrement décalé par rapport à celui-ci, tel qu'illustré sur la figure 8. Ce système de roulement peut être utilisé seul car il supporte des charges axiales et radiales ainsi que les moments. Par rapport aux deux systèmes de roulement à billes précités, il est peu encombrant pour une charge admissible assez importante. Le disque est solidaire d'une roue dentée 46 latérale disposée d'un côté du système de roulement, la roue dentée engrenant directement avec un pignon d'extrémité 442 de l'arbre d'entraînement 441 du moteur 44. Ce type de roulement à rouleau croisés, combiné à une roue dentée décalée transversalement engrenant directement avec l'arbre du moteur permet d'obtenir un réducteur étroit, par exemple de l'ordre de 74mm de largeur. Par rapport à un système de coupe de l'art antérieur, l'arbre d'entraînement est prolongé afin de reculer le moteur et permettre le passage des arceaux.

L'équilibrage des bras au moyen du dispositif de contrepoids permet d'utiliser le système de coupe dans une machine de type suspendue qui présente l'avantage d'avoir aucun élément mécanique au sol gênant pour la maintenance et le sol.

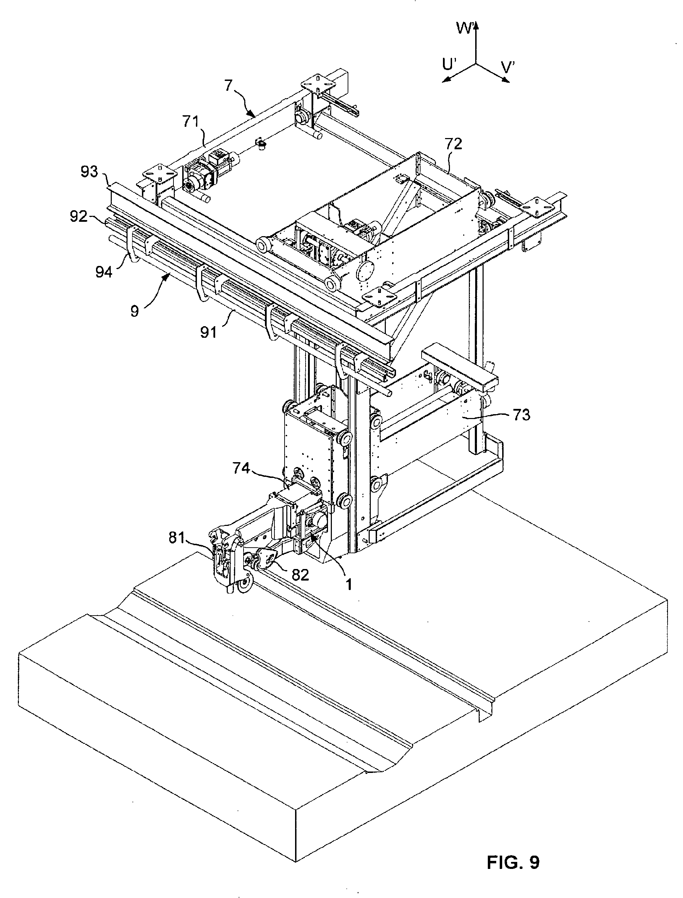

La figure 9 illustre de manière schématique une telle machine de découpe longitudinale de carcasses d'animaux de boucherie se déplaçant le long du rail 91 d'un convoyeur aérien 9, la machine comprenant un système de coupe 1 tel que décrit précédemment monté sur un système de déplacement 7, le système de déplacement étant apte à déplacer le système de coupe selon trois directions U', V', W' orthogonales entre elles.

Les animaux abattus, tels que des porcs, ovins ou bovins, sont par exemple suspendus au rail 91 par les pattes arrières au moyen de crochets de suspension solidaires de chariots de roulement, lesdits chariots étant engagés sur le rail et entraînés le long de ce dernier par des entraîneurs montés à intervalle régulier sur une chaîne sans fin passant dans un guide 92. La machine de découpe est disposée latéralement au niveau d'un tronçon rectiligne du convoyeur, les animaux étant suspendus de sorte que leurs abdomens soient disposés en vis-à-vis de la machine. Le rail est suspendu à des éléments 93 de charpente du bâtiment, tels que des poutres en I, par l'intermédiaire de chaises support 94 disposées à intervalle régulier.

Le système de déplacement 7 comporte un châssis 71 suspendu à une structure porteuse supérieure (non représentée), formée par exemple d'éléments de charpente du bâtiment, un premier chariot 72 monté mobile sur le châssis selon une première direction horizontale V' parallèle au rail, un deuxième chariot 73 monté mobile sur le premier chariot selon une deuxième direction verticale W' perpendiculaire à la première, et un troisième chariot 74 monté mobile horizontalement sur le deuxième chariot 73 selon une troisième direction horizontale U' perpendiculaire au rail. Le système de découpe est monté sur ce troisième chariot. Ce chariot porte également des systèmes de guidage 81, 82, connus en soi, pour guider le système de coupe le long de la colonne vertébrale de l'animal pendant la descente du troisième chariot. Les déplacements des trois chariots sont assurés par des moyens d'entraînement embarqués sur chacun d'entre eux, et asservis par une unité de commande de la machine, de sorte que le système de coupe puisse se déplacer selon l'axe V' en synchronisme avec le déplacement des animaux suspendus.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention définie par les revendications.

## Revendications

1. Système de coupe (1) pour la découpe ou fendage longitudinal de carcasses d'animaux de boucherie en deux demi-carcasses comprenant deux lames (2a, 2b) adjacentes chacune montée sur un bras (3a, 3b), lesdits bras étant montés sur un dispositif d'entraînement (4) à excentrique et à biellette, de part et d'autre d'un plan (P) de symétrie vertical, ledit dispositif d'entraînement étant apte à entraîner les deux lames selon un mouvement alterné oscillant

à composantes horizontale et verticale, sensiblement dans ledit plan (P) vertical de symétrie, **caractérisé en ce que** chaque bras (3a, 3b) est muni d'un dispositif de contrepoids (6a, 6b) comprenant un arceau (62a, 62b) fixé audit bras et portant en extrémité un contrepoids (61a, 61b) disposé du côté du plan de symétrie (P) opposé audit bras, de sorte que le bras avec sa lame (2a, 2b) et son dispositif de contrepoids ait un centre de gravité disposé sensiblement dans le plan de symétrie (P) et un produit d'inertie sensiblement nul.

2. Système de coupe selon la revendication 1, **caractérisé en ce que** ledit dispositif d'entrainement (4) comprend un réducteur à excentrique (40) comportant un disque d'excentrique (42) monté rotatif sur un support (41) et portant sur ses faces opposées des manetons d'excentrique (43a, 43b) diamétralement opposés, chaque bras (3a, 3b) étant monté pivotant sur un maneton d'excentrique et est articulé à une biellette (5a, 5b) articulée sur ledit support, chaque dispositif de contrepoids (6a, 6b) étant fixé par son arceau (62a, 62b) sur un tronçon du bras défini entre son extrémité (33a, 33b) opposée à la lame et son articulation au maneton d'excentrique.

3. Système de coupe selon la revendication 2, **caractérisé en ce que** l'arceau (62a, 62b) de chaque dispositif de contrepoids (6a, 6b) a une forme générale de L et comprend une première branche (621a, 621b) fixée au bras, s'étendant sensiblement perpendiculairement au plan de symétrie (P) et se prolongeant par une deuxième branche (622a, 622b), ladite deuxième branche s'étendant sensiblement parallèlement au plan de symétrie (P) et portant en extrémité ledit contrepoids (61a, 61b).

4. Système de coupe selon la revendication 3, **caractérisé en ce que** les premières branches (621a, 621b) des arceaux (62a, 62b) sont décalées longitudinalement.

5. Système de coupe selon l'une des revendications 2 à 4, **caractérisé en ce que** le dispositif d'entraînement (4) comprend un réducteur dont ledit disque d'excentrique (42) est monté rotatif dans le support (41) au moyen d'un système central de roulement (45) à rouleaux croisés et est solidaire d'une roue dentée (46) latérale engrenant avec un pignon d'extrémité (442) de l'arbre d'entraînement (441) d'un moteur (44).

6. Machine de découpe longitudinale de carcasses d'animaux de boucherie suspendues sensiblement verticalement à un convoyeur aérien **caractérisée en ce qu'**elle comprend un système de coupe (1) selon l'une des revendications 1 à 5, monté sur un système de déplacement (7), ledit système de déplacement étant apte à être fixé de manière suspendue à une structure porteuse supérieure, et étant apte à déplacer ledit système de coupe selon au moins une première direction verticale.

**Patentansprüche**

1. Schneidsystem (1) zum Längsschneiden oder -teilen vorn Körpern von Schlachttieren in zwei Körperhälften, das zwei benachbarte Klingen (2a, 2b) umfasst, die jeweils an einem Arm (3a, 3b) montiert sind, wobei die Arme an einer Exzenterantriebsvorrichtung (4) mit Kniehebel beiderseits einer vertikalen Symmetrieebene (P) montiert sind, wobei die Antriebsvorrichtung dazu geeignet ist, die zwei Klinken gemäß einer alternierenden Oszillationsbewegung mit einer horizontalen und einer vertikalen Komponente im Wesentlichen in der vertikalen Symmetrieebene (P) anzutreiben, dadurch gekenntzeichnet, dass jeder Arm (3as 3b) mit einer Gegengewichtvorrichtung (6a, 6b) ausgestattet ist, die einen Bügel (62a, 62b) umfaßt, der an dem Arm befestigt ist und am Ende ein Gegengewicht (61a, 61b) trägt, das an der Seite der dem Arm gegenüberliegenden Symmetrieebene (P) anbeordnet ist, so dass der Arm mit seiner Klinge (2a, 2b) und seiner Gegengewichtvorrichtung einen Schwerpunkt, der im wesenlichen in der Symmetrieebene (P) anbeordnet ist, und ein Trägheitsprodukt vorn im Wesentlichen null hat.

2. Schneidsystem nach Anspruch 1, **dadurch gekennzeichnet, dass** die Antriebsvorrichtung (4) ein Exzentergetriebe (40) umfasst, das eine Excenterscheibe (42) umfasst, die an einer Halterung (41) drehbar montiert ist und auf ihren gegenüberliegenden Flächen diametral gegenüberliegende Exzenterzapfen (43a, 43b) trägt, wobei jeder Arm (3a, 3b) an einem Exzenterzapfen schwenkbar montiert ist und mit einem Kniehebel (5a, 5b) gelenkig verbunden ist, der mit der Halterung gelenkig verbunden ist, wobei die Gegengewichtvorrichtung (6a, 6b) durch ihren Bügel (62a, 62b) an einem Abschnitt des Arms befestigt ist, der zwischen seinem der Klinge gegenüberliegenden Ende (33a, 33b) und seiner Gelenkverbindung mit dem Exzenterzapfen definiert ist.

3. Schneidsystem nach Anspruch 2, **dadurch gekennzeichnet, dass** der Bügel (62a, 62b) jeder Gegengewichtvorrichtung (6a, 6b) eine allgemeine L-form hat und einen ersten Schenkel (621a, 621b) umfasst, der an dem Arm befestigt ist, sich im Wesentlichen senkrecht zu der Symmetrieebene (P) erstreckt und sich durch einen zweiten Schenkel (622a, 622b) fortsetzt, wobei der zweite Schenkel sich im Wesentlichen parallel zu der Symmetrieebene (P) erstreckt und am Ende das Gegengewicht (61a, 61b) trägt.

4. Schneidsystem nach Anspruch 3, **dadurch gekennzeichnet, dass** die ersten Schenkel (621a, 621b) der Bügel (62a, 62b) längsversetzt sind.

5. Schneidsystem nach einem der Ansprüche 2 bis 4, **dadurch gekennzeichnet, dass** die Antriebsvorrichtung (4) ein Getriebe umfasst, dessen Exzenterscheibe (42) in der Halterung (41) mittels eines zentralen Lagersystems (45) mit Kreuzrollen drehbar montiert ist und mit einem lateralen Zahnrad (46) fest verbunden ist, das mit einem Endritzen (442) der Abtriebswelle (441) eines Motors (44) in Eingriff steht.

6. Maschine zum Längsschneiden von Körpern von Schlachttieren, die im Wesentlichen vertikal an einem Luftförderer hängen, **dadurch gekennzeichnet, dass** sie ein Schneidsystem (1) nach einem der Ansprüche 1 bis 5 umfasst, das an einem Verlagerungssystem (7) montiert ist, wobei das Verlagerungssystem dazu geeignet ist, hängend an einer oberen Tragestruktur befestigt zu werden, und dazu geeignet ist, das Schneidsystem gemäß mindestens einer ersten vertikalen Richtung zu verlagern.

## Claims

1. Cutting system (1) for longitudinal cutting or splitting of carcasses of slaughtered animals into two half-carcasses, including two adjacent blades (2a, 2b) each amounted on an arm (3a, 3b), said arms being amounted on a drive device (4) with a cam and a connecting rod on either side of a vertical plane (P) of symmetry, said drive device being adapted to drive reciprocating oscillatory motion of the two blades with horizontal and vertical components, substantially in said vertical plane (P) of symmetry, **characterized in that**
   each arm (3a, 3b) is provided with a counterweight device (6a, 6b) including a cradle (62a, 62b) fixed to said arm and carrying at the end a counterweight (61a, 61b) disposed on the apposite side of the plane (P) of symmetry to said arm so that the arm with its blade (2a, 2b) and its counterweight device has a centre of gravity disposed substantially in the plane (P) of symmetry and a substantially zero produce of inertia.

2. Cutting system according to Claim 1, **characterized in that** said drive device (4) includes a cam-type speed reducer (40) including a cam disc (42) rotatably mounted on a support (41) and carrying on its opposing faces diametrically apposite eccentric crank pins (43a, 43b), each arm (3a, 3b) is pivotably mounted on an eccentric crank pin and articulated to a connecting rod (5a, 5b) articulated to said support, and each counterweight device (6a, 6b) is fixed by its cradle (62a, 62b) to a section of the arm defined between its end (33a, 33b) opposite the blade and its articulation to the eccentric crank pin.

3. Cutting system according to Claim 2, **characterized in that** the cradle (62a, 62b) of each counterweight device (6a, 6b) is generally L-shaped and includes a first branch (621a, 621b) fixed to the arm extending substantially perpendicularly to the plane (P) of symmetry and extended by a second branch (622a, 622b) and said second branch extends substantially parallel to the plane (P) of symmetry and carries at the end said counterweight 61a, 61b).

4. Cutting system according to Claim 3, **characterized in that** the first branches (621a, 621b) of the cradles (62a, 62b) are longitudinally offset.

5. Cutting system according to any one of Claims 2 to 4, **characterized in that** the drive device (4) includes a speed reducer, said cam disk (42) of which is rotatable amounted in the support (41) by means of a central bearing system (45) with crossed rollers and is secured to a lateral toothed wheel (46) meshing with a opinion (442) at the end of the drive shaft (441) of a motor (44).

6. Machine for longitudinal cutting of carcasses of slaughtered animals suspended substantially vertically from an overhead conveyor, **characterized in that** it includes a cutting system (1) according to any one of claims 1 to 5 amounted on a movement system (7) adapted to be fixedly suspended from an overhead support structure and to move said cutting system in at least a first vertical direction.

**FIG. 1**

**FIG. 2**

FIG. 3

FIG. 4

FIG. 8

**FIG. 5**

**FIG. 6**

**FIG. 7**

**FIG. 9**

**EP 2 186 414 B1**

## RÉFÉRENCES CITÉES DANS LA DESCRIPTION

**Documents brevets cités dans la description**

*   FR 2307471